# FASCICULE DE BREVET EUROPEEN

(11) **EP 3 663 884 B1**
(45) Date de publication et mention de la délivrance du brevet: **30.03.2022**
(21) Numéro de dépôt: 19212060.8
(22) Date de dépôt: 28.11.2019
(51) Int. Cl.: G05D 1/02, E01C 1/00, E01C 13/08

(54) **ROBOT DE CARTOGRAPHIE D'UN TERRAIN DE SPORT SYNTHÉTIQUE**
KARTIERUNGSROBOTER EINES SYNTHETISCHEN SPORTFELDES
MAPPING ROBOT OF A SYNTHETIC SPORTS FIELD

(30) Priorité: 04.12.2018 FR 1872288
(43) Date de publication de la demande: 10.06.2020
(73) Titulaire: Mabis, 95100 Argenteuil (FR)
(72) Inventeur: CHOURAQUI, Yoann, 95100 ARGENTEUIL (FR)
(74) Mandataire: Cabinet Le Guen Maillet

(56) Documents cités:
- WO-A1-2014/007627
- WO-A1-2018/000922
- US-A1- 2012 265 391
- US-A1- 2017 258 011
- US-A1- 2017 260 704

## Description

### DOMAINE TECHNIQUE

La présente invention concerne un système comportant un robot de cartographie et un système de visualisation et qui permet de cartographier les zones d'un terrain de sport synthétique par rapport à l'état dudit terrain.

### ETAT DE LA TECHNIQUE ANTERIEURE

Actuellement, les terrains de sport synthétiques sont largement utilisés. Le terrain synthétique est constitué d'une base, de brins synthétiques matérialisant les brins d'herbe et fixés à la base, et des billes, en particulier en sable ou en élastomère, qui sont déversées entre les brins synthétiques.

Selon qu'une zone du terrain synthétique est plus ou moins utilisée, les billes ont tendance à migrer d'une zone à l'autre, ce qui donne à termes des zones plus ou moins denses en billes. Il est alors nécessaire de rééquilibrer la distribution des billes sur le terrain synthétique.

Actuellement, ce rééquilibrage s'effectue de manière empirique, ce qui induit une consommation importante de billes ainsi que des densités variables sur le terrain.

Le document US-A-2017/260704 divulgue un robot de nettoyage équipé d'un système de localisation. Le document WO-A-2018/000922 divulgue une tondeuse. Le document US-A-2017/258011 divulgue un robot de nettoyage. Le document US-A-2012/265391 divulgue un procédé pour diriger un robot. Le document WO2014/007627 A1 divulgue un robot de maintenance de terrain synthétique.

Aucun de ces documents ne permet de donner des informations sur l'état du terrain où évolue le robot.

### EXPOSE DE L'INVENTION

Un objet de la présente invention est de proposer un système comportant robot de cartographie et un système de visualisation et qui permet de cartographier la densité de billes sur un terrain synthétique.

A cet effet, est proposé un système comportant un robot de cartographie qui comporte :
- un châssis,
- au moins deux roues motorisées,
- pour chaque roue motorisée, un moteur qui entraîne en rotation ladite roue,
- un système de localisation déterminant la position du robot sur un terrain synthétique,
- un élément de frottement qui présente des dents qui frottent sur le terrain synthétique, et
- une unité de contrôle agencée pour recueillir des informations de position délivrées par le système de localisation le système étant caractérisé en ce que j
l'unité de contrôle est également agencée pour recueillir des informations de consommation électrique de chaque moteur, le système comportant en outre un système de visualisation qui comporte un écran et est en liaison avec l'unité de contrôle, en outre l'unité de contrôle est agencée pour associer à chaque information de position, le fait que l'information de consommation électrique correspond à une consommation électrique supérieure ou inférieure à un seuil, en outre les informations de consommation électrique sont représentatives d'une densité de billes sur ledit terrain synthétique, et en outre le système de visualisation est agencé pour afficher sur l'écran les informations de consommation électrique en fonction des informations de position.

Un tel robot permet donc au cours de son déplacement d'évaluer la densité de billes en fonction de la géolocalisation sur le terrain synthétique. Par lecture de cette évaluation, il est alors possible de réapprovisionner uniquement les zones qui en ont besoin.

Avantageusement, l'élément de frottement est réglable en hauteur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec le dessin joint où

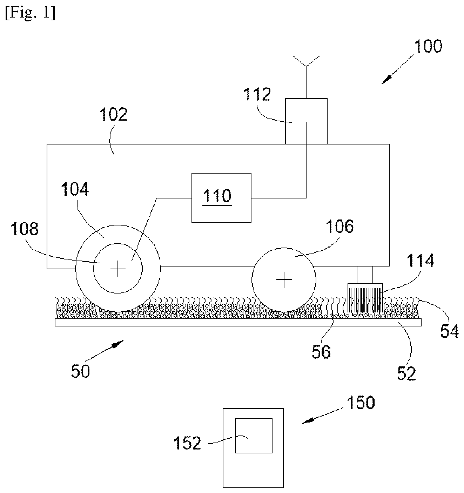

[Fig. 1] montre un système comportant un robot de cartographie selon l'invention.

### EXPOSE DETAILLE DE MODES DE REALISATION

Dans la description qui suit, les termes relatifs à une position sont pris en référence à un robot de cartographie en position d'utilisation sur un terrain synthétique c'est-à-dire tel qu'il est représenté à la Fig. 1.

La Fig. 1 montre un système 180 comportant un robot de cartographie 100 qui est disposé sur un terrain synthétique 50 et un système de visualisation 150.

Le terrain synthétique 50 comporte une base 52, des brins synthétiques 54 matérialisant les brins d'herbe et fixés à la base 52, et des billes 56, en particulier en sable ou en élastomère, qui sont déversées entre les brins synthétiques 54.

Le robot 100 comporte un châssis 102 qui est monté sur au moins trois roues 104 et 106 formant un triangle pour supporter le châssis 102. Il y a au moins deux roues 104 motorisées et disposées de part et d'autre du châssis 102 par rapport à un plan médian du robot 100. Il y a au moins une roue 106 complémentaire qui est par exemple montée folle sous le châssis 102.

Pour chaque roue 104 motorisée, le robot 100 comporte un moteur 108 qui est un moteur électrique qui entraîne en rotation la roue 104 dans un sens de rotation ou dans l'autre.

Le robot 100 comporte également une unité de contrôle 110 qui commande chaque moteur 108. Selon que le robot 100 doit aller tout droit ou tourner, l'unité de contrôle 110 va alimenter les deux moteurs de manière identique ou de manière différente.

Le robot 100 comporte également un système de localisation 112 qui peut être par exemple du type GPS, balise radio, système infrarouge, etc. D'une manière générale, le système de localisation 112 permet de déterminer la position du robot 100 sur le terrain synthétique 50 soit de manière absolue dans le cas du GPS, soit de manière relative par rapport à une borne de référence dans le cas d'un système infrarouge. Le système de localisation 112 est connecté à l'unité de contrôle 110.

L'unité de contrôle 110 comporte, classiquement reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage ; au moins une interface de communication, permettant à l'unité de contrôle 110 de communiquer avec les moteurs 108 et le système de localisation 112.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque le robot 100 est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessous.

Tout ou partie des algorithmes et étapes décrits ci-dessous peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

Le robot 100 comporte également sous le châssis 102, un élément de frottement 114 qui présente des dents et qui peut être une brosse ou un peigne. Les dents de l'élément de frottement 114 pénètrent entre les brins synthétiques 54 et frottent sur le terrain synthétique 50.

Ainsi, lorsque le robot 100 se déplace sur le terrain synthétique 50, les dents frottent contre les brins synthétiques 54 et les billes 56 et en fonction de la densité de billes 56, la résistance à l'avancement va varier, ce qui engendrera une variation dans la consommation de courant par les moteurs 108.

Ainsi, lorsque la densité de billes 56 augmente, la consommation augmente car les frottements sont plus importants, et inversement, lorsque la densité de billes 56 diminue, la consommation diminue car les frottements sont moindres.

Par contrôle des moteurs 108, l'unité de contrôle 110 connaît la consommation instantanée de chaque moteur 108, et la position du robot 100 par le système de localisation 112, elle peut ainsi associer une consommation de courant à chaque endroit du terrain synthétique 50, permettant ainsi de repérer les zones du terrain synthétique 50 en fonction de la densité de billes 56 et ainsi repérer les zones où les densités sont les plus faibles et où des billes 56 doivent donc être ajoutées.

Ainsi, si la consommation de courant des moteurs 108 est au-dessus d'un seuil, il n'est pas nécessaire d'ajouter des billes 56 et si la consommation de courant des moteurs 108 est au-dessous du seuil, il est nécessaire d'ajouter des billes 56. Le seuil correspond donc à une densité de billes 56 minimale à atteindre.

La cartographie du terrain synthétique 50 et les densités qui correspondent à chaque zone sont enregistrées dans la mémoire de l'unité de contrôle 110.

L'unité de contrôle 110 est ainsi agencée pour recueillir des informations de position délivrées par le système de localisation 112 et des informations de consommation électrique de chaque moteur 108, et pour associer les informations de consommation électrique aux informations de position. Les informations de consommation électrique sont directement représentatives de la densité de billes 56.

En d'autres termes, l'unité de contrôle 110 associe à chaque information de position, si l'information de consommation électrique correspond à une consommation électrique supérieure ou inférieure à un seuil. Ainsi, lorsque la consommation électrique est supérieure à un seuil, cela signifie que la densité de billes 56 est supérieure à la densité minimale attendue, et si la consommation électrique est inférieure au seuil, cela signifie que la densité de billes 56 est inférieure à la densité minimale attendue.

Par exemple, l'association consiste en la génération à chaque instant t, d'un vecteur regroupant les coordonnées X et Y, et la consommation I de chaque moteur et qui est stocké dans la mémoire de l'unité de contrôle 110.

Afin de pouvoir adapter le robot 100 en fonction du type de terrain synthétique 50, la hauteur de l'élément de frottement 114 est réglable, manuellement ou mécaniquement. Dans le cas d'un réglage manuel, l'élément de frottement 114 engrène sur une vis sans fin à axe vertical dont la rotation va relever ou abaisser l'élément de frottement 114. Dans le cas d'un réglage mécanique, l'élément de frottement 114 peut être fixé à une tige verticale d'un vérin qui peut être déplacée par commande de l'utilisateur.

Pour faciliter la lecture des informations de cartographie et de densité, le robot 100 est intégré au système 180 comportant également le système de visualisation 150 qui est par exemple un ordinateur ou un smartphone et qui comporte un écran 152.

Le système de visualisation 150 est en liaison avec l'unité de contrôle 110 et agencé pour afficher sur l'écran 152, les informations de consommation électrique en fonction des informations de position.

L'unité de contrôle 110 peut transmettre les informations recueillies à l'utilisateur, par exemple par l'intermédiaire d'une application du système de visualisation 150, et afficher sur l'écran 152, le terrain synthétique 50 et visualiser de manières différentes les zones devant recevoir des billes 56 et les zones ne devant pas en recevoir. L'utilisateur peut alors ajouter des billes 56 uniquement où cela est nécessaire d'où une moindre consommation de billes 56 et un meilleur suivi de l'état du terrain synthétique 50.

La communication entre le système de visualisation 150 et l'unité de contrôle 110 s'effectue par exemple de manière filaire par connexion d'un câble entre le robot 100 et le système de visualisation 150 ou de manière sans fil, par exemple à travers des technologies de communication sans fil, comme par exemple le Wifï^{®}, le Bluetooth^{®}...

## Revendications

1. Système (180) comportant un robot de cartographie (100) :
le robot de cartographie (100) comportant:
- un châssis (102),
- au moins deux roues (104) motorisées,
- pour chaque roue (104) motorisée, un moteur (108) qui entraîne en rotation ladite roue (104),
- un système de localisation (112) déterminant la position du robot (100) sur un terrain synthétique (50),
- un élément de frottement (114) qui présente des dents qui frottent sur le terrain synthétique (50), et
- une unité de contrôle (110) agencée pour recueillir des informations de position délivrées par le système de localisation (112), le système (180) étant **caractérisé en ce que** l'unité de contrôle (110) est également agencée pour recueillir des informations de consommation électrique de chaque moteur (108), le système (180) comportant en outre un système de visualisation (150) qui comporte un écran (152) et est en liaison avec l'unité de contrôle (110), en outre l'unité de contrôle (110) est agencée pour associer à chaque information de position, le fait que l'information de consommation électrique correspond à une consommation électrique supérieure ou inférieure à un seuil, en outre les informations de consommation électrique sont représentatives d'une densité de billes sur ledit terrain synthétique (50), et en outre le système de visualisation (150) est agencé pour afficher sur l'écran (152) les informations de consommation électrique en fonction des informations de position.

2. Système (180) selon la revendication 1, **caractérisé en ce que** l'élément de frottement (114) est réglable en hauteur.

## Patentansprüche

1. System (180), das einen Kartierungsroboter (100) umfasst:
wobei der Kartierungsroboter (100) Folgendes umfasst:
- ein Chassis (102),
- mindestens zwei angetriebene Räder (104),
- für jedes angetriebene Rad (104) einen Motor (108), der das Rad (104) drehend antreibt,
- ein Positionsbestimmungssystem (112), das die Position des Roboters (100) auf einem synthetischen Feld (50) bestimmt,
- ein Reibelement (114), das Zähne umfasst, die auf dem synthetischen Feld (50) reiben, und
- eine Steuereinheit (110), die dazu eingerichtet ist, Positionsinformationen zu empfangen, die von dem Positionsbestimmungssystem (112) geliefert werden,
wobei das System (180) **dadurch gekennzeichnet ist, dass** die Steuereinheit (110) außerdem dazu eingerichtet ist,
Informationen zum Stromverbrauch jedes Motors (108) zu empfangen,
wobei das System (180) ferner ein Visualisierungssystem (150) umfasst, das einen Bildschirm (152) umfasst und mit der Steuereinheit (110) in Verbindung steht,
wobei ferner die Steuereinheit (110) dazu eingerichtet ist, jeder Positionsinformation die Tatsache zuzuordnen,
dass die Information zum Stromverbrauch einem Stromverbrauch oberhalb oder unterhalb eines Schwellenwerts entspricht,
wobei ferner die Informationen zum Stromverbrauch repräsentativ für eine Dichte von Kügelchen auf dem synthetischen Feld (50) sind, und
wobei ferner das Visualisierungssystem (150) dazu eingerichtet ist, auf dem Bildschirm (152) die Informationen zum Stromverbrauch in Abhängigkeit der Positionsinformationen anzuzeigen.

2. System (180) nach Anspruch 1, **dadurch gekennzeichnet, dass** das Reibelement (114) höhenverstellbar ist.

## Claims

1. System (180) comprising a mapping robot (100)
the mapping robot (100) comprising:
- a frame (102),
- at least two motorized wheels (104),
- for each motorized wheel (104), a motor (108) which drives said wheel (104) in rotation,
- a location system (112) determining the position of the robot (100) on a synthetic ground (50),
- a friction element (114) which has teeth which rub on the synthetic ground (50), and
- a control unit (110) arranged to collect position information delivered by the location system (112),
the system (180) being **characterized in that** the control unit (110) is also arranged to collect information on electrical consumption of each motor (108),
the system (180) comprising also a display system (150) which comprises a screen (152) and is linked with the control unit (110),
in addition, the control unit (110) is arranged to associate to each position information, the fact that the electrical consumption information corresponds to an electrical consumption which is above or below a threshold,
in addition, the electrical consumption information is representative of a density of balls on said synthetic ground (50), and
in addition, the display system (150) is arranged to display on the screen (152), the electrical consumption information as a function of the position information.

2. System (150) according to Claim 1, **characterized in that** the friction element (114) is adjustable heightwise.
